## Europäisches Patentamt
## European Patent Office
## Office européen des brevets

(11) Veröffentlichungsnummer: **0 266 710 B1**

# EUROPÄISCHE PATENTSCHRIFT

(45) Veröffentlichungstag der Patentschrift: **08.07.92**

(21) Anmeldenummer: **87116026.3**

(22) Anmeldetag: **31.10.87**

(51) Int. Cl.⁵: **G02B 27/02**, G02B 5/32

(54) **Anordnung zur bildlichen Darstellung unter Verwendung von holographischen Folien.**

(30) Priorität: **05.11.86 DE 3637672**
**11.02.87 DE 3704137**

(43) Veröffentlichungstag der Anmeldung:
**11.05.88 Patentblatt 88/19**

(45) Bekanntmachung des Hinweises auf die
Patenterteilung:
**08.07.92 Patentblatt 92/28**

(84) Benannte Vertragsstaaten:
**AT BE CH DE ES FR GB IT LI NL SE**

(56) Entgegenhaltungen:
**EP-A- 0 195 234       AU-B- 54 545**
**FR-A- 1 349 217       FR-A- 2 182 383**
**FR-A- 2 281 845       GB-A- 534 598**

**OPTICAL ENGINEERING, Band 24, Nr. 5, September/Oktober 1985, Seiten 769-780, Society of Photo-Optical Instrumentation Engineers, Bellingham, Washington, US; J.R. MAGARINOS et al.: "Holographic mirrors"**

(73) Patentinhaber: **Kok-Schram de Jong, Marijke Irene**
**Krimweg 3A**
**NL-7351 AS Hoenderloo(NL)**

(72) Erfinder: **Kok-Schram de Jong, Marijke Irene**
**Krimweg 3A**
**NL-7351 AS Hoenderloo(NL)**

(74) Vertreter: **Habbel, Hans-Georg, Dipl.-Ing.**
**Postfach 3429 Am Kanonengraben 11**
**W-4400 Münster(DE)**

## Beschreibung

Die Erfindung bezieht sich auf eine Anordnung gemäß dem Oberbegriff des Hauptanspruches.

In der Praxis sind sogenannte holographische Folien bekannt, d. h. Aluminiumfolien, die durch Bearbeiten mit einem Laserstrahl eine gewisse Musterung aufwei-sen. Derartige Folien finden in der Technik z. B. auf dem Gebiet des Wärmesektors zur Isolierung Anwendung oder werden gemäß der US-A-46 29 282 im graphischen Bereich eingesetzt.

In der EP-A-195 234 wird ein Bildkörper beschrieben, der im wesentlichen dadurch gebildet wird, daß eine Fotografie an einem transparenten Deckblatt angeordnet wird und die Gesamteinheit auf eine metallische Folie aufgelegt wird, die nicht glänzend sein darf. Als nicht glänzende metallische Folie wird eine normale Aluminiumfolie eingesetzt, die üblicherweise eine glänzende und eine nicht glänzende Seite aufweist, wobei im vorliegenden Fall die nicht glänzende Seite zum Einsatz kommt.

Der Erfindung liegt die Aufgabe zugrunde, eine Anordnung zu schaffen, bei der mit normalem Tageslicht das Betrachten eines Diapositives möglich ist.

Diese der Erfindung zugrundeliegende Aufgabe wird durch die Lehre des Hauptanspruches gelöst.

Vorteil hafte Ausgestaltungen sind in den Unteransprüchen erläutert.

Unter dem Begriff "Diapositiv" in der vorliegenden Anmeldung wird immer ein positives Bild verstanden, das auf einem lichtdurchlässigen Träger angeordnet ist, wobei dieser Träger aus Glas oder Kunststoff bestehen kann und das positive Bild durch fotographische Mittel oder durch Drucken oder durch Zeichnen erreichbar ist.

Mit anderen Worten ausgedrückt schlägt die Erfindung vor, daß die holographische Folie nicht bedruckt wird, sondern daß auf die holographische Folie ein Diapositiv aufgelegt wird. Wird dieses Diapositiv unmittelbar, d.h. nicht unter Zwischenschaltung eines gewissen Abstandes, auf die holographische Folie aufgelegt, entsteht kein räumliches Bild, sondern der Eindruck eines bedruckten Gegenstandes, z.B. einer Visitenkarte.

Im Gegensatz zu den normalen, auf holographischen Folien aufgetragenen Druckfarben sind die so aufgebrachten Kennzeichnungen wischfest und nicht zu entfernen.

Wird eine holographische Prismen-Folie eingesetzt und wird das Diapositiv im Abstand von der holographischen Prismen-Folie angeordnet, entsteht ein holographischer Effekt dadurch, daß man das Bild in vielen Farben sieht, weil das Diapositiv von der Rückseite her Licht bekommt und durchscheinend wird. Hierdurch wird zum ersten Mal die Möglichkeit gegeben, die Farben des Diapositivs zu erkennen, wobei dann, wenn die im Bild weiß erscheinenden Flächen eines Gegenstandes besonders deutlich hervorgehoben werden sollen, es sinnvoll ist, im Diapositiv diese Flächen weiß anzulegen, und zwar mit einer lichtundurchlässigen Farbe, vorzugsweise einer sogenannten Kalkfarbe.

Mit dieser Technik ist kein spezielles Licht erforderlich. Normalerweise benötigt man für die Wiedergabe von Diapositiven eine extra Lichtquelle, um das Bild zu projizieren. Die holographische Laserfolie gibt jedoch soviel Licht zurück, daß normales Tageslicht für das Betrachten des Bildes ausreicht.

Die Folie wirkt wie ein Spiegel, aber nur wenn man das Objekt, z.B. das Diapositiv, etwa 1 bis 5 mm von der Folie entfernt hält. Der Abstand hängt von der Schärfe des Diapositivs ab. Man sieht, ähnlich wie beim Spiegel, das Bild hinter der Folie und nicht, wie bei der Wiedergabe auf Papier, auf dem Papier.

Durch die erfindungsgemäße Anordnung lassen sich überraschende Effekte erzielen, die bisher von der Technik nicht erkannt sind und die einerseits zu ganz neuen technischen Möglichkeiten führen, aber auch im weiten Bereich künstlerische Möglichkeiten eröffnen.

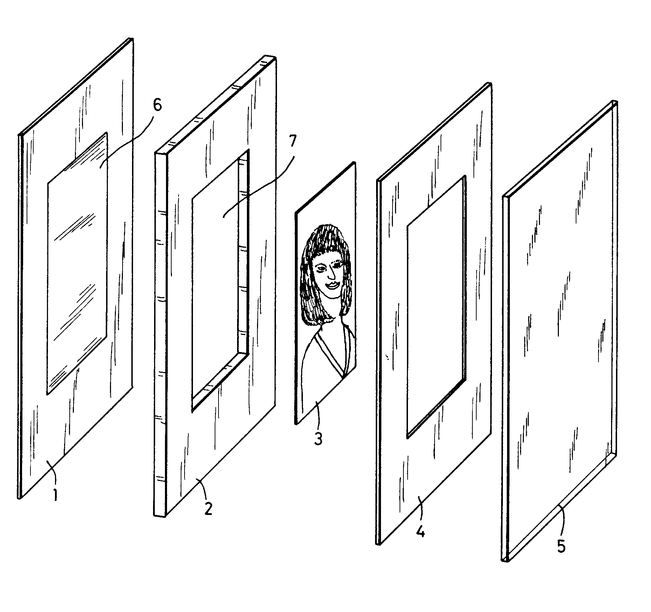

Zur Verdeutlichung des Erfindungsgegenstandes ist in der beigefügten Zeichnung eine Anordnung dargestellt, die der Herstellung eines holographisch wirkenden Bildes dient.

In der Zeichnung ist mit 1 ein Träger bezeichnet, beispielsweise aus Karton, der mit einer holographischen Prisma-Folie 6 beschichtet ist. Vor diesen Trägerkarton 1 wird ein Rahmen 2 einer bestimmten Stärke angeordnet, der eine entsprechende Öffnung 7 aufweist, durch die dann die holographische Prismen-Folie hindurchscheint. Vor diese Öffnung wird auf den Rahmen 2 ein Diapositiv 3, vorzugsweise ein Bunt-Diapositiv angeordnet, das durch ein sogenanntes Passepartout 4 festgelegt wird. Das ganze wird dann mit einer Glasscheibe 5 abgedeckt, die in einem in der Zeichnung nicht dargestellten Rahmen gehalten ist.

Diese erfindungsgemäße Anordnung hat den Vorteil, daß das Diapositiv 3 von der Rückseite her belichtet wird, d.h. beleuchtet wird und daß dadurch die wirklichen Farben des Diapositives aufscheinen.

Um die besonders zu betonenden, üblicherweise weißen Bereiche eines Bildes nicht durch das einfallende Licht abzuschwächen, werden diese weiß zu erscheinenden Bereiche mit weißer Kalkfarbe angelegt, die absolut lichtundurchlässig ist, so daß diese Bereiche ihr Licht nur von vorne, nicht aber von hinten bekommen.

## Patentansprüche

**1.** Anordnung zur bildlichen Darstellung mit einem an einem lichtdurchlässigen Träger angeordneten positiven Bild und einer metallischen Folie, dadurch gekennzeichnet, daß eine holographische Folie (6) auf einem Trägerkarton (1) angeordnet ist, auf dem Trägerkarton (1) ein eine Stärke von etwa 5 mm aufweisender Rahmen (2) vorgesehen ist und vor die Öffnung des Rahmens (2) ein Diapositiv (3) eingesetzt ist, wobei das Diapositiv (3) auf der vom Trägerkarton (1) abgewandten Seite durch ein Passepartout (4) abgedeckt ist und als vorderer Abschluß eine Glasplatte (1) in einem alle Bauteile umfassenden Rahmen gehalten ist.

**2.** Anordnung nach Anspruch 1, dadurch gekennzeichnet, daß das Diapositiv bunt ist.

**3.** Anordnung nach Anspruch 1 oder 2, dadurch gekennzeichnet, daß die im Bild weiß zu erscheinenden Teile des Diapositivs mit weißer, lichtundurchlässiger Farbe, vorzugsweise einer Kalkfarbe, angelegt sind.

## Claims

**1.** Arrangement for pictorial representation with a positive image arranged on a transparent support and with a metal foil, characterised in that a holographic foil (6) is arranged on a support card (1), a frame (2), which has a thickness of approximately 5 mm, is provided on the support card (1), and a transparency (3) is inserted in front of the opening of the frame (2), the transparency (3) being covered on the side facing away from the support card (1) by a passe-partout (4), and a glass sheet (5) being held as front closure in a frame enclosing all components.

**2.** Arrangement according to Claim 1, characterised in that the transparency is coloured.

**3.** Arrangement according to Claim 1 or 2, characterised in that the parts of the transparency which are to appear white in the image are coated with white, opaque paint, preferably a lime paint.

## Revendications

**1.** Disposition pour la représentation d'images avec une image positive disposée sur un support translucide et une feuille métallique, caractérisé en ce qu'une feuille holographique (6) est disposée sur un carton-support (1), en ce qu'un cadre (2) présentant une épaisseur d'environ 5 mm est prévu sur le carton-support (1) et en ce qu'une diapositive (3) est placée devant l'ouverture du cadre (2), la diapositive (3) étant recouverte sur la face opposée au carton-support (1) par un passe-partout (4) et une plaque de verre (5) servant de fermeture antérieure étant maintenue dans un cadre renfermant tous les éléments.

**2.** Disposition selon la revendication 1, caractérisée en ce que la diapositive est en couleurs.

**3.** Disposition selon l'une quelconque des revendications 1 ou 2, caractérisée en ce que les parties de la diapositive devant apparaître en blanc sur l'image sont réalisées avec un pigment ne laissant pas passer la lumière, de préférence un pigment à chaux.